# FASCICULE DE BREVET EUROPEEN

(11) **EP 4 155 597 B1**
(45) Date de publication et mention de la délivrance du brevet: **06.11.2024**
(21) Numéro de dépôt: 22194723.7
(22) Date de dépôt: 08.09.2022
(51) Int. Cl.: F16L 39/00, F16L 17/035, F16L 17/06, F16L 51/00, F16L 51/02, F16J 15/08, F16J 15/10, F16J 15/48, B64D 37/30, B64D 37/32, G01M 3/28, F16L 17/073, F16L 27/12

(54) **CANALISATION D'HYDROGÈNE À DOUBLE PEAU COMPRENANT AU MOINS UN SYSTÈME DE DÉTECTION DE FUITE AU NIVEAU D'AU MOINS UN SYSTÈME DE RACCORDEMENT, AÉRONEF COMPRENANT AU MOINS UNE TELLE CANALISATION**
WASSERSTOFFLEITUNG MIT DOPPELTER WAND MIT MINDESTENS EINEM SYSTEM ZUR ERKENNUNG VON LECKS AN MINDESTENS EINEM VERBINDUNGSSYSTEM, LUFTFAHRZEUG MIT MINDESTENS EINER SOLCHEN LEITUNG
HYDROGEN PIPE WITH DOUBLE WALL COMPRISING AT LEAST ONE SYSTEM FOR DETECTING LEAKS IN AT LEAST ONE CONNECTION SYSTEM, AIRCRAFT COMPRISING AT LEAST ONE SUCH PIPE

(30) Priorité: 28.09.2021 FR 2110236
(43) Date de publication de la demande: 29.03.2023
(73) Titulaire: Airbus Operations SAS, 31060 Toulouse (FR)
(72) Inventeur: SOULIE, Adeline, 31060 TOULOUSE (FR)
(74) Mandataire: Fantin, Laurent

(56) Documents cités:
- KR-A- 20100 136 238
- US-A- 5 088 774
- US-A1- 2004 026 922

## Description

La présente demande se rapporte à une canalisation d'hydrogène à double peau comprenant au moins un système de détection de fuite au niveau d'au moins un système de raccordement ainsi qu'à un aéronef comprenant au moins une telle canalisation.

Selon un mode de réalisation, un aéronef fonctionnant à l'hydrogène comprend au moins un réservoir d'hydrogène, des canalisations d'hydrogène reliant le réservoir d'hydrogène et des turboréacteurs à hydrogène ou des piles à combustible alimentant des moteurs électriques. Ces canalisations d'hydrogène doivent être configurées pour acheminer l'hydrogène sous forme liquide, à une température de l'ordre de -270°C, et être parfaitement étanches pour éviter tout contact entre l'hydrogène et l'oxygène.

Selon un mode de réalisation, l'hydrogène est acheminé dans des canalisations à double peau comprenant chacune un conduit externe et un conduit interne positionné dans le conduit externe, l'espace intercalaire entre les conduits interne et externe étant mis au vide pour isoler l'hydrogène canalisé dans le conduit interne et l'air situé à l'extérieur du conduit externe. Pour stopper l'écoulement de l'hydrogène en cas de fuite et obtenir une canalisation sûre, cette dernière comprend une vanne pour stopper l'écoulement de l'hydrogène dans le conduit interne ainsi qu'au moins un capteur de pression configuré pour mesurer la pression dans l'espace intercalaire. Ainsi, lorsque le capteur de pression détecte une augmentation de pression dans la zone intercalaire, correspondant à une probable fuite d'hydrogène ou d'oxygène, la vanne est commutée à l'état fermé.

Compte tenu de la distance entre le réservoir et les turboréacteurs ou les piles à combustible, les canalisations comprennent chacune plusieurs tronçons mis bout à bout.

L'obtention d'une canalisation sûre sur toute sa longueur, et plus particulièrement dans les zones de raccordement des tronçons, s'avère problématique.

Le document KR20100136238 décrit une canalisation comprenant au moins des premier et deuxième tronçons ainsi qu'au moins un système de raccordement reliant les premier et deuxième tronçons, chacun des premier et deuxième tronçons comportant un conduit externe, un conduit interne positionné dans le conduit externe ainsi qu'un espace intercalaire situé entre les conduits externe et interne et contenant une première atmosphère, le système de raccordement comprenant au moins une couronne aval reliée à au moins un des conduits externe et interne du premier tronçon, au moins une couronne amont reliée à au moins des conduits externe et interne du deuxième tronçon ainsi que des éléments de liaison reliant les couronnes amont et aval. En complément, le système de raccordement comprend des premier et deuxième joints annulaires intercalés entre les couronnes amont et aval et configurés pour délimiter avec les couronnes amont et aval un espace tampon contenant une deuxième atmosphère, la canalisation comprenant un système de détection de fuite configuré pour déterminer au moins une caractéristique de la deuxième atmosphère. Une première couronne parmi les couronnes amont et aval comprend sur une face frontale, pour chaque joint annulaire, une rainure pour immobiliser radialement le joint annulaire. La première couronne comprend un conduit débouchant sur la face frontale, entre les joints annulaires, relié au système de détection de fuite.

Compte tenu de la différence de pression entre l'espace tampon et l'intérieur du conduit interne ou l'extérieur du conduit externe, ces rainures ne sont pas suffisantes pour maintenir les joints de part et d'autre de la zone où débouche le conduit relié au système de détection de fuite.

La présente invention vise à proposer une solution à cette problématique.

A cet effet, l'invention a pour objet une canalisation comprenant au moins des premier et deuxième tronçons ainsi qu'au moins un système de raccordement reliant les premier et deuxième tronçons, chacun des premier et deuxième tronçons comportant un conduit externe, un conduit interne positionné dans le conduit externe, un espace intercalaire situé entre les conduits externe et interne et contenant une première atmosphère, la canalisation comprenant au moins un système de détection de fuite configuré pour déterminer une caractéristique de la première atmosphère, le système de raccordement comprenant au moins une couronne aval reliée à au moins un des conduits externe et interne du premier tronçon, au moins une couronne amont reliée à au moins des conduits externe et interne du deuxième tronçon ainsi que des éléments de liaison reliant les couronnes amont et aval, le système de raccordement comprenant des premier et deuxième joints annulaires intercalés entre les couronnes amont et aval et configurés pour délimiter avec les couronnes amont et aval un espace tampon contenant une deuxième atmosphère, la canalisation comprenant au moins un système de détection de fuite configuré pour déterminer au moins une caractéristique de la deuxième atmosphère.

Selon l'invention, le système de raccordement comprend au moins une butée pour maintenir les premier et deuxième joints annulaires écartés, le premier joint annulaire présentant un diamètre intérieur, le deuxième joint annulaire étant positionné à l'intérieur du premier joint annulaire et présentant un diamètre extérieur. En complément, la butée est une nervure circulaire solidaire d'une première couronne parmi les couronnes amont et aval, la nervure circulaire présentant un diamètre extérieur sensiblement égal au diamètre intérieur du premier joint annulaire et un diamètre intérieur sensiblement égal au diamètre extérieur du deuxième joint annulaire, le système de raccordement comprenant au moins un orifice traversant une deuxième couronne, différente de la première couronne, parmi les couronnes amont et aval, pour faire communiquer l'espace tampon et l'un des espaces intercalaires des premier et deuxième tronçons.

Cette solution permet de pouvoir détecter une éventuelle fuite au niveau du système de raccordement et de rendre plus sûre la canalisation.

Selon une autre caractéristique, le système de raccordement comprend au moins une entretoise intercalée entre les couronnes amont et aval pour les maintenir espacées.

Selon une autre caractéristique, chaque entretoise est un tube configuré pour loger un des éléments de liaison.

Selon une autre caractéristique, les premier et deuxième joints annulaires sont des joints de section transversale en sigma.

Selon une autre caractéristique, le système de raccordement comprend, pour au moins un des premier et deuxième tronçons, une première couronne reliée au conduit externe, une deuxième couronne reliée au conduit interne ainsi qu'une liaison étanche reliant les première et deuxième couronnes.

Selon une autre caractéristique, la liaison étanche comprend au moins une entretoise intercalée entre les première et deuxième couronnes pour les maintenir écartées, des éléments de liaison reliant les première et deuxième couronnes ainsi qu'un joint annulaire intercalé entre les première et deuxième couronnes.

Selon une autre caractéristique, au moins un des conduits externe et interne d'au moins un des premier et deuxième tronçons comprend un système de compensation des phénomènes de dilatation.

L'invention a également pour objet un aéronef comprenant au moins une canalisation selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'une canalisation illustrant un premier mode de réalisation de l'invention,
- La figure 2 est une coupe illustrant en détail une zone II de la figure 1,
- La figure 3 est une coupe illustrant en détail une zone III de la figure 1,
- La figure 4 est une coupe illustrant en détail une zone IV de la figure 1,
- La figure 5 est une coupe longitudinale d'une canalisation illustrant un deuxième mode de réalisation,
- La figure 6 est une coupe illustrant en détail une zone VI de la figure 5, et
- La figure 7 est une coupe illustrant en détail une zone VII de la figure 5.

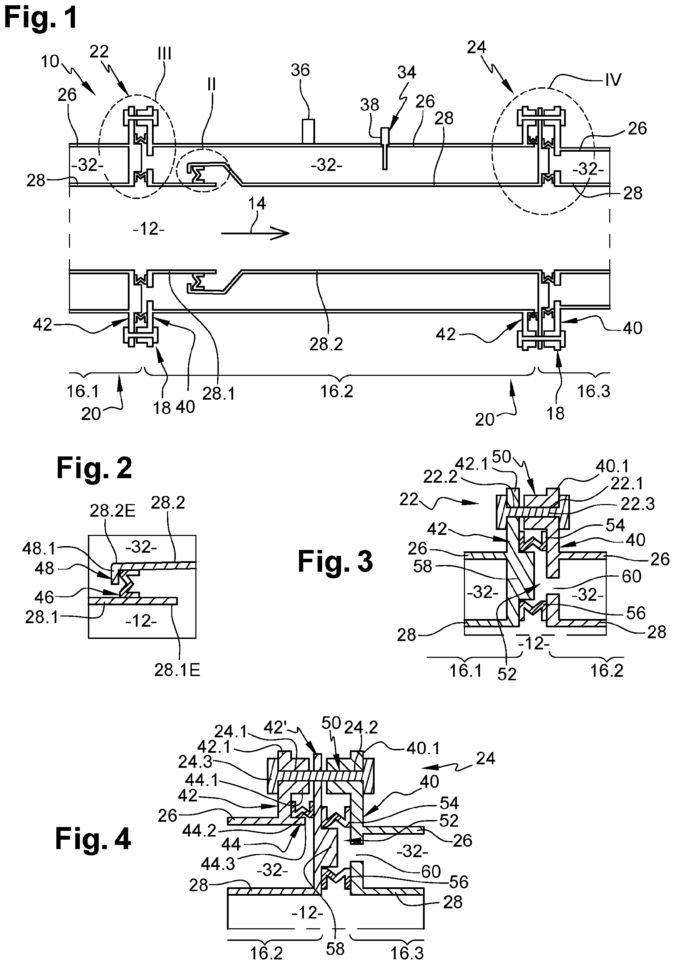

Selon les premier et deuxième modes de réalisation visibles sur les figures 1 à 7, une canalisation 10 est configurée pour canaliser un fluide 12 selon un sens d'écoulement 14. Selon une application, un aéronef comprend au moins une telle canalisation 10 pour canaliser de l'hydrogène à l'état liquide ou à l'état gazeux.

Pour la suite de la description, une direction longitudinale est une direction parallèle au sens d'écoulement 14. Les termes amont et aval font référence au sens d'écoulement 14 du fluide 12 dans la canalisation 10, le fluide s'écoulant de l'amont vers l'aval.

La canalisation 10 comprend plusieurs tronçons, notamment des premier, deuxième et troisième tronçons 16.1, 16.2, 16.3 positionnés bout à bout, le premier tronçon 16.1 correspondant à un tronçon amont positionné en amont du deuxième tronçon 16.2, le troisième tronçon 16.3 correspondant à un tronçon aval positionné en aval du deuxième tronçon 16.2.

Selon une configuration, les premier, deuxième et troisième tronçons 16.1, 16.2, 16.3 sont identiques.

Bien entendu, l'invention n'est pas limitée à ce nombre de tronçons. Quel que soit le mode de réalisation, la canalisation 10 comprend au moins deux tronçons.

Chaque tronçon comprend une extrémité amont 18 et une extrémité aval 20. Pour chaque tronçon 16.1, 16.2, 16.3, l'extrémité amont 18 est reliée à l'extrémité aval du tronçon amont par un premier système de raccordement 22 et l'extrémité aval 20 est reliée à l'extrémité amont du tronçon aval par un deuxième système de raccordement 24. Selon une configuration, les premier et deuxième systèmes de raccordement 22, 24 sont identiques.

Chaque tronçon 16.1, 16.2, 16.3 comprend un conduit externe 26, un conduit interne 28 configuré pour canaliser le fluide 12 et positionné à l'intérieur du conduit externe 26.

Selon un mode de réalisation, les conduits externe et interne 26, 28 sont cylindriques et présentent des axes parallèles entre eux et à la direction longitudinale. Selon un agencement, les conduits externe et interne 26 sont coaxiaux.

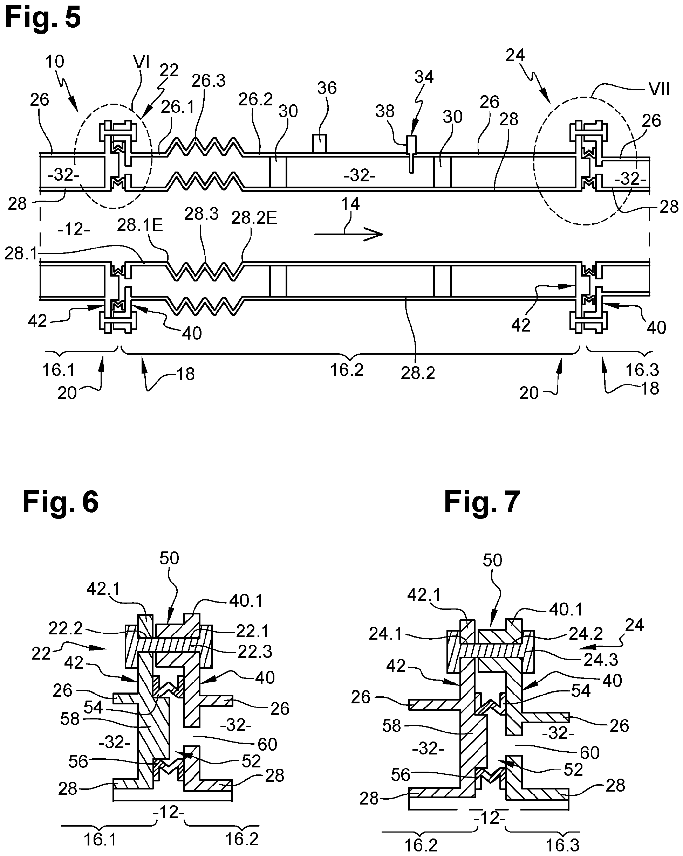

Selon une configuration visible sur la figure 5, le tronçon 16.2 comprend au moins un écarteur 30 maintenant les conduits externe et interne 26, 28 espacés sur toute leur circonférence. Selon un agencement, le tronçon 16.2 comprend deux écarteurs 30 espacés selon la direction longitudinale. Chaque écarteur 30 comprend une couronne qui présente un diamètre intérieur sensiblement égal au diamètre extérieur du conduit interne 28 et un diamètre extérieur sensiblement égal au diamètre intérieur du conduit externe 26. Bien entendu, l'invention n'est pas limitée à ce mode de réalisation concernant le (ou les) écarteur(s) 30. Chaque tronçon 16.1, 16.2, 16.3 comprend un espace intercalaire 32 situé entre les conduits externe et interne 26, 28 et contenant une atmosphère.

La canalisation 10 comprend au moins un système de détection de fuite 34 configuré pour déterminer au moins une caractéristique de l'atmosphère de l'espace intercalaire 32. Chaque tronçon 16.1, 16.2, 16.3 comprend au moins un système de détection de fuite 34. Selon une application, ce système de détection de fuite 34 est utilisé pour commander une vanne de coupure de l'écoulement de fluide dans la canalisation 10.

Selon une première configuration, l'espace intercalaire 32 présente un niveau de vide donné. Selon cette première configuration, le tronçon 16.2 comprend un raccord 36 configuré pour raccorder un appareil de mise au vide et extraire le gaz présent dans l'espace intercalaire 32 afin d'obtenir le niveau de vide donné. En complément, le système de détection de fuite 34 comprend au moins un capteur de pression 38 configuré pour mesurer une pression dans l'espace intercalaire 32.

Selon une deuxième configuration, l'espace intercalaire 32 contient un gaz d'inertage à une pression donnée. Selon cette deuxième configuration, le tronçon 16.2 comprend un raccord 36 configuré pour raccorder un appareil de mise au vide afin d'extraire le gaz présent dans l'espace intercalaire 32 puis une alimentation en gaz d'inertage afin de remplir l'espace intercalaire 32 en gaz d'inertage à une pression donnée. En complément, le système de détection de fuite 34 comprend un capteur de mesure d'une concentration d'oxygène ou d'hydrogène dans l'espace intercalaire 32.

Selon une première configuration visible notamment sur les figures 3, 6, 7, au moins un tronçon 16.1, 16.2, 16.3 comprend une couronne amont 40 reliant les conduits externe et interne 26, 28 au niveau de l'extrémité amont 18 ainsi qu'une couronne aval 42 reliant les conduits externe et interne 26, 28 au niveau de l'extrémité aval 20. Les couronnes amont et aval 40, 42 sont identiques et se présentent chacune sous la forme d'une plaque positionnée dans un plan approximativement perpendiculaire à la direction longitudinale. Chaque couronne amont ou aval 40, 42 présente un diamètre intérieur sensiblement égal au diamètre intérieur du conduit interne 28 et un diamètre extérieur supérieur au diamètre extérieur du conduit externe 26. Les couronnes amont et aval 40, 42 sont reliés aux conduits externe et interne 26, 28 de manière étanche.

Chacune des couronnes amont et aval 40, 42 présente une zone périphérique 40.1, 42.1 qui s'étend au-delà du conduit externe 26.

Pour un tronçon considéré 16.2, le premier système de raccordement 22 comprend des premiers orifices traversants 22.1 positionnés dans la zone périphérique 40.1 de la couronne amont 40 du tronçon considéré 16.2 ainsi que des deuxièmes orifices traversants 22.2 positionnés dans la zone périphérique 42.1 de la couronne aval 42 du tronçon amont 16.1, chacun des premiers orifices traversants 22.1 étant positionné au droit d'un deuxième orifice traversant 22.2. En complément, le premier système de raccordement 22 comprend des premiers éléments de liaison 22.3 reliant les couronnes amont et aval 40, 42, logés dans les premiers et deuxièmes orifices traversants 22.1, 22.2. En parallèle, le deuxième système de raccordement 24 comprend des premiers orifices traversants 24.1 positionnés dans la zone périphérique 42.1 de la couronne aval 42 du tronçon considéré 16.2 ainsi que des deuxièmes orifices traversants 24.2 positionnés dans la zone périphérique 40.1 de la couronne amont 40 du tronçon aval 16.3, chacun des premiers orifices traversants 24.1 étant positionné au droit d'un deuxième orifice traversant 24.2. En complément, le deuxième système de raccordement 24 comprend des deuxièmes éléments de liaison 24.3, reliant les couronnes amont et aval 40, 42, logés dans les premiers et deuxièmes orifices traversants 24.1, 24.2.

Selon une deuxième configuration visible notamment sur la figure 4, pour au moins un tronçon 16.2, le système de raccordement 24 comprend une première couronne aval 42 (ou amont) reliée au conduit externe 26, une deuxième couronne aval 42' (ou amont) reliée au conduit interne 28 ainsi qu'une liaison étanche 44 reliant les première et deuxième couronnes aval 42, 42' (ou amont). Selon un premier agencement, les première et deuxième couronnes aval 42, 42' (ou amont) sont plaquées l'une contre l'autre sur toute leur circonférence et maintenues plaquées par des éléments de liaison. Selon un deuxième agencement, la liaison étanche 44 comprend au moins une entretoise 44.1 intercalée entre les première et deuxième couronnes aval 42, 42' (ou amont) afin de les maintenir écartées selon la direction longitudinale sur toute leur circonférence, des éléments de liaison reliant les première et deuxième couronnes aval 42, 42' (ou amont) ainsi qu'un joint annulaire 44.2 intercalé entre les première et deuxième couronnes aval 42, 42' (ou amont). Selon une configuration, les éléments de liaison de la liaison étanche 44 sont ceux du système de raccordement 24. En complément, la liaison étanche 44 comprend plusieurs entretoises 44.1 réparties sur la circonférence des première et deuxième couronnes aval 42, 42' (ou amont). Chaque entretoise 44.1 se présente sous la forme d'un tube traversé par un des éléments de liaison. La liaison étanche 44 peut comprendre une entretoise 44.1 pour chaque élément de liaison.

Selon un agencement, le joint annulaire 44.2 présente un diamètre intérieur sensiblement égal au diamètre extérieur du conduit externe 26.

Pour maintenir en place le joint annulaire 44.2, la liaison étanche 44 comprend au moins une butée 44.3, solidaire d'une des première et deuxième couronnes aval 42, 42' (ou amont), configurée en fonction de la différence de pression entre l'extérieur du conduit externe 26 et l'espace intercalaire 32. La pression à l'extérieur du conduit externe 26 étant nettement supérieure à celle à l'intérieur de l'espace intercalaire 32, la butée 44.3 est tubulaire, reliée à la première couronne aval 42, positionnée dans le prolongement du conduit externe 26 et à l'intérieur du joint annulaire 44.2. A titre d'exemple, le joint annulaire 44.2 est un joint de section transversale en sigma Σ, orienté de manière à ce que la différence de pression de part et d'autre du joint annulaire 44.2 renforce l'étanchéité.

L'invention n'est pas limitée à ces modes de réalisation pour les extrémités des tronçons et les systèmes de raccordement 22, 24. Quel que soit le mode de réalisation, un système de raccordement 22, 24 comprend au moins une couronne aval 42 reliée à au moins un des conduits externe et interne 26, 28 d'un premier tronçon, au moins une couronne amont 40 reliée à au moins des conduits externe et interne 26, 28 d'un deuxième tronçon ainsi que des éléments de liaison 22.3, 24.3 reliant les couronne amont et aval 40, 42.

Pour tenir compte des phénomènes de dilatation selon la direction longitudinale, selon un premier mode de réalisation visible sur la figure 1, le conduit interne 28 comprend une première partie 28.1 qui s'étend de la couronne amont 40 jusqu'à une première extrémité 28.1E ainsi qu'une deuxième partie 28.2 qui s'étend de la couronne aval 42 jusqu'à une deuxième extrémité 28.2E, les première et deuxième extrémités 28.1E, 28.2E étant configurées pour coulisser l'une dans l'autre. Selon un agencement, la première extrémité 28.1E coulisse dans la deuxième extrémité 28.2E qui présente une section transversale élargie. Selon ce premier mode de réalisation, comme illustré en détail sur la figure 2, le conduit interne 28 présente au moins un joint annulaire 46 intercalé entre les première et deuxième extrémités 28.1E, 28.2E, positionné dans la zone de chevauchement des première et deuxième extrémités 28.1E, 28.2E. En complément, le conduit interne 28 comprend au moins une butée 48 pour maintenir en place le joint annulaire 46 entre les première et deuxième extrémités 28.1E, 28.2E, configurée en fonction de la différence de pression entre l'intérieur du conduit interne 28 et l'espace intercalaire 32. La pression à l'intérieur du conduit interne 28 étant nettement supérieure à celle à l'intérieur de l'espace intercalaire 32, la butée 48 comprend un rebord 48.1 relié à la deuxième partie 28.2 du conduit interne 28 et positionné au niveau de la deuxième extrémité 28.2E. A titre d'exemple, le joint annulaire 46 est un joint de section transversale en sigma Σ, orienté de manière à ce que la différence de pression de part et d'autre du joint annulaire 46 renforce l'étanchéité.

Selon un deuxième mode de réalisation visible sur la figure 5, le conduit interne 28 comprend une partie 28.1 qui s'étend de la couronne amont 40 jusqu'à une première extrémité 28.1E, une deuxième partie 28.2 qui s'étend de la couronne aval 42 jusqu'à une deuxième extrémité 28.2E ainsi qu'un soufflet 28.3 reliant les première et deuxième parties 28.1, 28.2 et plus particulièrement leurs première et deuxième extrémités 28.1E, 28.2E.

Selon ce deuxième mode de réalisation, le conduit externe 26 peut comprendre des première et deuxième parties 26.1, 26.2 ainsi qu'un soufflet 26.3 reliant les première et deuxième parties 26.1, 26.2.

Bien entendu, l'invention n'est pas limitée à ces modes de réalisation, au moins un des conduits externe et interne d'au moins un tronçon comprenant un système de compensation des phénomènes de dilatation selon la direction longitudinale.

Selon une caractéristique de l'invention, au moins un système de raccordement 22, 24 comprend au moins une entretoise 50 intercalée entre les couronnes amont et aval 40, 42 pour les maintenir espacées et créer un espace tampon 52 entre les couronnes amont et aval 40, 42.

Selon une configuration, le système de raccordement 22, 24 comprend plusieurs entretoises 50 réparties sur toute la circonférence des couronnes amont et aval 40, 42. Chaque entretoise 50 est un tube configuré pour loger un des éléments de liaison 22.3, 24.3. Le système de raccordement 22, 24 comprend autant d'entretoises 50 que d'éléments de liaison 22.3, 24.3. Les entretoises 50 ont toutes la même longueur (dimension prise selon la direction longitudinale)

Le système de raccordement 22, 24 comprend des premier et deuxième joints annulaires 54, 56, intercalés entre les couronnes amont et aval 40, 42, positionnés de manière à isoler l'espace tampon 52 de l'intérieur du conduit interne 28 et de l'extérieur du conduit externe 26. Selon un agencement, le premier joint annulaire 54 est positionné dans le prolongement des conduits externes 26 et le deuxième joint annulaire 56 est positionné à l'intérieur du premier joint annulaire 54, dans le prolongement des conduits internes 28. A titre d'exemple, les premier et deuxième joints annulaires 54, 56 sont des joints de section transversale en sigma Σ, orientés de manière à ce que la différence de pression de part et d'autre des joints annulaires 54, 56 renforce l'étanchéité.

Quel que soit le mode de réalisation, les premier et deuxième joints annulaires 54, 56 délimitent avec les couronnes amont et aval 40, 42 un espace tampon 52 qui permet de détecter une éventuelle fuite au niveau du système de raccordement 22, 24. Ainsi, le système de raccordement 22, 24 peut ne pas comprendre d'entretoise 50 si les premier et deuxième joints annulaires sont configurés pour assurer la fonction d'entretoise 50.

Selon une configuration, chaque système de raccordement 22, 24 comprend au moins une entretoise 50 pour maintenir les couronnes amont et aval 40, 42 espacées ainsi que des premier et deuxième joints annulaires 54, 56 délimitant avec les couronnes amont et aval 40, 42 un espace tampon 52 contenant une atmosphère.

Le système de raccordement 22, 24 comprend au moins une butée 58 pour maintenir écartés les premier et deuxième joints annulaires 54, 56. Cette (ou ces) butée(s) 58 est (sont) configurée(s) en fonction de la différence de pression entre d'une part l'espace tampon 52 et d'autre part l'intérieur du conduit interne 28 et l'extérieur du conduit externe 26.

La pression dans l'espace tampon 52 étant nettement inférieure à celle de l'intérieur du conduit interne 28 et à celle de l'extérieur du conduit externe 26, le système de raccordement 22, 24 comprend une butée 58, intercalée entre les premier et deuxième joints annulaires 54, 56, empêchant le rapprochement de ces derniers. La butée 58 est une nervure circulaire solidaire de la couronne amont 40 qui présente un diamètre extérieur sensiblement égal au diamètre intérieur du premier joint annulaire 54 et un diamètre intérieur sensiblement égal au diamètre extérieur du deuxième joint annulaire 56. Cette dernière pourrait être solidaire de la couronne aval 42.

Au moins l'une des butée 58 présente une dimension, selon un direction longitudinale, inférieure à la longueur des entretoises 50.

La canalisation 10 comprend au moins un système détection de fuite configuré pour déterminer au moins une caractéristique de l'atmosphère de l'espace tampon 52.

Selon une première configuration, l'espace tampon 52 présente un niveau de vide donné. En complément, le système de détection de fuite comprend au moins un capteur de pression pour mesurer la pression dans l'espace tampon 52 afin de détecter une fuite.

Selon une autre configuration, l'espace tampon 52 contient un gaz d'inertage à une pression donnée. En complément, le système de détection de fuite du système de raccordement 22, 24 comprend au moins un capteur configuré pour détecter une concentration d'hydrogène ou d'oxygène dans l'espace tampon 52 afin de détecter une fuite.

Le système de raccordement 22, 24 comprend au moins un orifice 60 traversant la couronne amont ou aval 40, 42 pour faire communiquer l'espace tampon 52 avec l'un des espaces intercalaires 32 des tronçons amont et aval. Ainsi, l'espace tampon 52 et l'espace intercalaire 32 présentent la même atmosphère, la même pression et un unique système de détection de fuite 34, comme un capteur de pression 38 permettant de détecter une fuite dans les espaces intercalaire et tampon 32, 52.

Selon un agencement, le système de raccordement 22, 24 comprend plusieurs orifices 60 répartis sur la circonférence de la couronne amont ou aval 40, 42. Le fait de prévoir plusieurs orifices améliore la détection d'une fuite dans l'espace tampon 52 par un système de détection de fuite positionné au niveau de l'espace intercalaire 32. Ces orifices 60 sont régulièrement répartis sur toute la circonférence de la couronne amont ou aval 40, 42. Les orifices 60 sont prévus sur la couronne amont 40 du tronçon aval. Toutefois, ils pourraient être positionnés sur la couronne aval 42 du tronçon amont. La butée 58 est solidaire d'une première couronne parmi les couronnes amont et aval 40, 42 et le (ou les) orifice(s) est (ou sont) positionné(s) sur une deuxième couronne parmi les couronnes amont et aval 40, 42 différente de la première couronne.

## Revendications

1. Canalisation comprenant au moins des premier et deuxième tronçons (16.1, 16.2) ainsi qu'au moins un système de raccordement (22, 24) reliant les premier et deuxième tronçons (16.1, 16.2), chacun des premier et deuxième tronçons (16.1, 16.2) comportant un conduit externe (26), un conduit interne (28) positionné dans le conduit externe (26), un espace intercalaire (32) situé entre les conduits externe et interne (26, 28) et contenant une première atmosphère, la canalisation comprenant au moins un système de détection de fuite (34) configuré pour déterminer une caractéristique de la première atmosphère, le système de raccordement (22, 24) comprenant au moins une couronne aval (42) reliée à au moins un des conduits externe et interne (26, 28) du premier tronçon (16.1), au moins une couronne amont (40) reliée à au moins des conduits externe et interne (26, 28) du deuxième tronçon (16.2) ainsi que des éléments de liaison (22.3, 24.3) reliant les couronnes amont et aval (40, 42) ; le système de raccordement (22, 24) comprenant des premier et deuxième joints annulaires (54, 56) intercalés entre les couronnes amont et aval (40, 42) et configurés pour délimiter avec les couronnes amont et aval (40, 42) un espace tampon (52) contenant une deuxième atmosphère, la canalisation comprenant au moins un système de détection de fuite configuré pour déterminer au moins une caractéristique de la deuxième atmosphère, le système de raccordement (22, 24) comprenant au moins une butée (58) pour maintenir les premier et deuxième joints annulaires (54, 56) écartés, le premier joint annulaire (54) présentant un diamètre intérieur, le deuxième joint annulaire (56) étant positionné à l'intérieur du premier joint annulaire (54) et Présentant un diamètre extérieur la butée (58) étant une nervure circulaire solidaire d'une première couronne parmi les couronnes amont et aval (40, 42), la nervure circulaire présentant un diamètre extérieur sensiblement égal au diamètre intérieur du premier joint annulaire (54) et un diamètre intérieur sensiblement égal au diamètre extérieur du deuxième joint annulaire (56) et le système de raccordement (22, 24) comprenant au moins un orifice (60) traversant une deuxième couronne, différente de la première couronne, parmi les couronnes amont et aval (40, 42), pour faire communiquer l'espace tampon (52) et l'un des espaces intercalaires (32) des premier et deuxième tronçons (16.1, 16.2).

2. Canalisation selon la revendication 1, **caractérisée en ce que** le système de raccordement (22, 24) comprend au moins une entretoise (50) intercalée entre les couronnes amont et aval (40, 42) pour les maintenir espacées.

3. Canalisation selon la revendication précédente, **caractérisée en ce que** chaque entretoise est un tube configuré pour loger un des éléments de liaison (22.3, 24.3).

4. Canalisation selon l'une des revendications précédentes, **caractérisée en ce que** les premier et deuxième joints annulaires (54, 56) sont des joints de section transversale en sigma (Σ).

5. Canalisations selon l'une des revendications précédentes, **caractérisé en ce que** le système de raccordement (22, 24) comprend, pour au moins un des premier et deuxième tronçons (16.1, 16.2), une première couronne (42) reliée au conduit externe (26), une deuxième couronne (42') reliée au conduit interne (28) ainsi qu'une liaison étanche (44) reliant les première et deuxième couronnes (42, 42').

6. Canalisation selon la revendication précédente, **caractérisée en ce que** la liaison étanche (44) comprend au moins une entretoise (44.1) intercalée entre les première et deuxième couronnes (42, 42') pour les maintenir écartées, des éléments de liaison reliant les première et deuxième couronnes (42, 42') ainsi qu'un joint annulaire (44.2) intercalé entre les première et deuxième couronnes (42, 42').

7. Canalisation selon l'une des revendications précédentes, **caractérisée en ce qu'**au moins un des conduits externe et interne (26, 28) d'au moins un des premier et deuxième tronçons (16.1, 16.2) comprend un système de compensation des phénomènes de dilatation.

8. Aéronef comprenant au moins une canalisation selon l'une des revendications précédentes.

## Patentansprüche

1. Rohrleitung mit wenigstens einem ersten und einem zweiten Abschnitt (16.1, 16.2) sowie mit wenigstens einem Verbindungssystem (22, 24), das den ersten und den zweiten Abschnitt (16.1, 16.2) miteinander verbindet, wobei jeder der ersten und zweiten Abschnitte (16.1, 16.2) eine äußere Leitung (26), eine innere Leitung (28), die in der äußeren Leitung (26) angeordnet ist, und einen Zwischenraum (32) aufweist, der sich zwischen der äußeren und der inneren Leitung (26, 28) befindet und eine erste Atmosphäre enthält, wobei die Rohrleitung wenigstens ein Leckdetektionssystem (34) aufweist, das so eingerichtet ist, dass es eine Eigenschaft der ersten Atmosphäre bestimmt, wobei das Verbindungssystem (22, 24) wenigstens einen stromabwärtigen Ring (42) aufweist, der mit wenigstens einer der äußeren und inneren Leitungen (26, 28) des ersten Abschnitts (16.1) verbunden ist, wenigstens einen stromaufwärtigen Ring (40) aufweist, der mit wenigstens einer der äußeren und inneren Leitung (26, 28) des zweiten Abschnitts (16.2) verbunden ist, sowie Verbindungselemente (22.3, 24.3) aufweist, die den stromaufwärtigen und den stromabwärtigen Ring (40, 42) miteinander verbinden, wobei das Verbindungssystem (22, 24) erste und zweite ringförmige Dichtungen (54, 56) aufweist, die zwischen den stromaufwärts und stromabwärts gelegenen Ringen (40, 42) angeordnet und so eingerichtet sind, dass sie mit den stromaufwärts und stromabwärts gelegenen Ringen (40, 42) einen Pufferraum (52) begrenzen, der eine zweite Atmosphäre enthält, wobei die Rohrleitung wenigstens ein Leckdetektionssystem aufweist, das so eingerichtet ist, dass es wenigstens eine Eigenschaft der zweiten Atmosphäre bestimmt, wobei das Verbindungssystem (22, 24) wenigstens einen Anschlag (58) aufweist, um die erste und die zweite Ringdichtung (54, 56) voneinander beabstandet zu halten, und wobei die erste Ringdichtung (54) einen Innendurchmesser aufweist, die zweite ringförmige Dichtung (56) innerhalb der ersten ringförmigen Dichtung (54) angeordnet ist und einen Außendurchmesser aufweist und der Anschlag (58) eine kreisförmige Rippe ist, die fest mit einem ersten Ring aus den stromaufwärts und stromabwärts gelegenen Ringen (40, 42) verbunden ist und einen Außendurchmesser aufweist, der im Wesentlichen gleich dem Innendurchmesser der ersten ringförmigen Dichtung (54) ist, und einen Innendurchmesser aufweist, der im Wesentlichen gleich dem Außendurchmesser der zweiten ringförmigen Dichtung (56) ist, und wobei das Verbindungssystem (22, 24) wenigstens eine Öffnung (60) aufweist, die durch einen vom ersten Ring verschiedenen zweiten Ring aus den stromaufwärts und stromabwärts gelegenenen Ringen (40, 42) verläuft, um den Pufferraum (52) und einen der Zwischenräume (32) des ersten und zweiten Abschnitts (16.1, 16.2) in Verbindung zu bringen.

2. Rohrleitung nach Anspruch 1, **dadurch gekennzeichnet, dass** das Verbindungssystem (22, 24) wenigstens einen Abstandshalter (50) aufweist, der zwischen den stromaufwärts und stromabwärts gelegenen Ringen (40, 42) eingefügt ist, um diese voneinander beabstandet zu halten.

3. Rohrleitung nach dem vorhergehenden Anspruch, **dadurch gekennzeichnet, dass** jeder Abstandshalter ein Rohr ist, das so eingerichtet ist, dass es eines der Verbindungselemente (22.3, 24.3) aufnimmt.

4. Rohrleitung nach einem der vorhergehenden Ansprüche, **dadurch gekennzeichnet, dass** die erste und die zweite Ringdichtung (54, 56) Dichtungen mit Sigma-Querschnitt (Σ) sind.

5. Rohrleitungen nach einem der vorhergehenden Ansprüche, **dadurch gekennzeichnet, dass** das Verbindungssystem (22, 24) für wenigstens einen der ersten und zweiten Abschnitte (16.1, 16.2) einen ersten Ring (42), der mit der äußeren Leitung (26) verbunden ist, einen zweiten Ring (42'), der mit der inneren Leitung (28) verbunden ist, sowie eine dichte Verbindung (44) aufweist, die den ersten und zweiten Ring (42, 42') miteinander verbindet.

6. Rohrleitung nach dem vorhergehenden Anspruch, **dadurch gekennzeichnet, dass** die dichte Verbindung (44) wenigstens einen Abstandshalter (44.1), der zwischen dem ersten und dem zweiten Ring (42, 42') eingefügt ist, um sie auseinanderzuhalten, Verbindungselemente, die den ersten und den zweiten Ring (42, 42') verbinden, sowie eine ringförmige Dichtung (44.2) aufweist, die zwischen dem ersten und dem zweiten Ring (42, 42') eingefügt ist.

7. Rohrleitung nach einem der vorhergehenden Ansprüche, **dadurch gekennzeichnet, dass** wenigstens eine der äußeren und inneren Leitungen (26, 28) von wenigstens einem der ersten und zweiten Abschnitte (16.1, 16.2) ein System zur Kompensation von Dehnungserscheinungen aufweist.

8. Luftfahrzeug mit wenigstens einer Rohrleitung nach einem der vorhergehenden Ansprüche.

## Claims

1. Pipeline comprising at least first and second portions (16.1, 16.2) and at least one coupling system (22, 24) connecting the first and second portions (16.1, 16.2), each of the first and second portions (16.1, 16.2) comprising an outer pipe (26), an inner pipe (28) positioned inside the outer pipe (26), an intermediary space (32) situated between the outer and inner pipes (26, 28) and containing a first atmosphere, the pipeline comprising at least one leak detection system (34) configured to determine a characteristic of the first atmosphere, the coupling system (22, 24) comprising at least a downstream flange ring (42) connected to at least one of the outer and inner pipes (26, 28) of the first portion (16.1), at least an upstream flange ring (40) connected to at least one of the outer and inner pipes (26, 28) of the second portion (16.2), and connecting elements (22.3, 24.3) connecting the upstream and downstream flange rings (40, 42); the coupling system (22, 24) comprising first and second annular seals (54, 56) interposed between the upstream and downstream flange rings (40, 42) and configured to delimit, with the upstream and downstream flange rings (40, 42), a buffer space (52) containing a second atmosphere, the pipeline comprising at least one leak detection system configured to determine at least one characteristic of the second atmosphere, the coupling system (22, 24) comprising at least one end stop (58) to keep the first and second annular seals (54, 56) apart, the first annular seal (54) having an inside diameter, the second annular seal (56) being positioned inside the first annular seal (54) and having an outside diameter and the end stop (58) being a circular rib secured to a first flange ring of either the upstream or the downstream flange rings (40, 42), the circular rib having an outside diameter substantially equal to the inside diameter of the first annular seal (54) and an inside diameter substantially equal to the outside diameter of the second annular seal (56), the coupling system (22, 24) comprising at least one through-orifice (60) passing through at least one of the upstream and downstream flange rings (40, 42) to cause the buffer space (52) to communicate with one of the intermediary spaces (32) of the first and second portions (16.1, 16.2).

2. Pipeline as claimed in claim 1, wherein the coupling system (22, 24) comprises at least one spacer (50) interposed between the upstream and downstream flange rings (40, 42) to keep them spaced apart.

3. Pipeline as claimed in the preceding claim, wherein each spacer is a tube configured to house one of the connecting elements (22.3, 24.3).

4. Pipeline as claimed in one of the preceding claims, wherein the first and second annular seals (54, 56) are seals with a cross section in the shape of a sigma (Σ).

5. Pipeline as claimed in one of the preceding claims, wherein the coupling system (22, 24) comprises, for at least one of the first and second portions (16.1, 16.2), a first flange ring (42) connected to the outer pipe (26), a second flange ring (42') connected to the inner pipe (28) and a sealed connection (44) connecting the first and second flange rings (42, 42').

6. Pipeline as claimed in the preceding claim, wherein the sealed connection (44) comprises at least one spacer (44.1) interposed between the first and second flange rings (42, 42') in order to keep them spaced apart, connecting elements connecting the first and second flange rings (42, 42') and an annular seal (44.2) interposed between the first and second flange rings (42, 42').

7. Pipeline as claimed in one of the preceding claims, wherein at least one of the outer and inner pipes (26, 28) of at least one of the first and second portions (16.1, 16.2) comprises a system for compensating for expansion phenomena.

8. Aircraft comprising at least one pipeline as claimed in one of the preceding claims.
